# EUROPÄISCHE PATENTSCHRIFT

(11) **EP 1 492 642 B1**
(45) Veröffentlichungstag und Bekanntmachung des Hinweises auf die Patenterteilung: **29.08.2007**
(21) Anmeldenummer: 03745685.2
(22) Anmeldetag: 01.04.2003
(51) Int. Cl.: B23K 9/10

(54) **VERFAHREN ZUR EINSTELLUNG VON PARAMETERN BEI SCHWEISSGERÄTEN**
METHOD FOR SETTING PARAMETERS IN WELDING DEVICES
PROCEDE DE REGLAGE DE PARAMETRES D'APPAREILS DE SOUDAGE

(30) Priorität: 11.04.2002 AT 5632002
(43) Veröffentlichungstag der Anmeldung: 05.01.2005
(73) Patentinhaber: Fronius International GmbH, 4643 Pettenbach (AT)
(72) Erfinder: BURGSTALLER, Andreas, A-4653 Eberstalzell (AT); PERNEGGER, Markus, A-4653 Eberstalzell (AT); TRINKFASS, Philipp, A-4720 Taufkirchen a.d. Trattnach (AT)
(74) Vertreter: Sonn & Partner Patentanwälte
(86) Internationale Anmeldenummer: PCT/AT2003/000094
(87) Internationale Veröffentlichungsnummer: WO 2003/084706

(56) Entgegenhaltungen:
- WO-A-00/41835

## Beschreibung

Die Erfindung betrifft ein Verfahren zur Einstellung eines Parameters für externe Bedieneinheiten eines Schweißgerätes, wobei über unterschiedliche Bedienelemente und Anzeigeelemente am Schweißgerät die Schweißparameter ausgewählt und eingestellt werden können; siehe WO-A-00 41 835.

Es sind bereits verschiedenste Einstellmöglichkeiten bei Schweißgeräten bekannt, bei denen vom Schweißgerät aus die unterschiedlichsten Parameter eingestellt werden können. Zusätzlich können über angeschlossene externe Komponenten bestimmte fix festgelegte Parameter verändert werden. Nachteilig ist hierbei, dass es oft erforderlich ist, spezielle Parameter für bestimmte Schweißprozesse bzw. Anwendungen zu verändern, so dass diese nur über das Schweißgerät verändert werden können oder die Komponente für diesen Schweißprozess bzw. für diese Anwendung getauscht werden muss.

Die EP 0903 195 A1 beschreibt ein System zur ferngesteuerten Einstellung, Steuerung und Regelung von Funktionen von Schweißgeräten, welches es dem Benutzer ermöglicht, Schweißparameter, wie z.B. die Schweißstromstärke oder den Schweißdrahtvorschub, ohne Ortswechsel zu steuern. Zu diesem Zweck werden die Schweißparameter über eine drahtlos mit dem Schweißgerät verbundene Fernsteuerung eingestellt bzw. verändert. Dabei kann der Benutzer aus bestimmten Einstellungen und voreingestellten Kombinationen auswählen. Durch die voreingestellten Kombinationen ist das Verfahren bzw. das Schweißgerät jedoch sehr unflexibel, da über die Fernbedienung nur voreingestellte Schweißparameter ausgewählt und verändert werden können.

Die US 6 040 555 A zeigt eine Fernsteuerung für Schweißgeräte, bei der zwischen dem Werkstück und dem Elektrodenhalter eine Fernsteuerung eingesetzt wird, welche bestimmte Größen, wie z.B. den Schweißstrom, detektiert. Von der Fernsteuerung werden den detektierten Größen zugeordnete Signale über das Schweißkabel zu einem Schaltkreis weitergeleitet und zur Regelung bestimmter Schweißparameter herangezogen werden.

Die US 6 103 994 A beschreibt ein Schweißgerät , an das verschiedenartige externe Bedieneinheiten angeschlossen werden können. Die jeweilige externe Bedieneinheit, wie z.B. ein Fingerschalter oder ein Fußschalter, wird vom Schweißgerät automatisch erkannt. Abhängig von der erkannten externen Bedieneinheit werden bestimmte Schweißparameter, für welche die Bedieneinheit ausgelegt ist, zugeordnet und je nach Stellung der Bedieneinheit, beispielsweise des Fußschalters, der zugeordnete Schweißparameter entsprechend verändert. Mit dem System gemäß diesem Dokument sind den möglichen externen Bedieneinheiten jedoch immer ganz bestimmte Schweißparameter fix zugeordnet.

Der Erfindung liegt die Aufgabe zugrunde, ein Verfahren zur Einstellung eines Schweißparameters für externe Bedieneinheiten eines Schweißgerätes bzw. einer Schweißanalage zu schaffen, bei dem eine wesentlich Verbesserung der Bedieneroberfläche erreicht und eine flexible Anpassung der Einstellmöglichkeiten der externen Komponenten, die an das Schweißgerät angeschlossen werden, für die unterschiedlichsten Anwendungsfälle bzw. Schweißprozesse ermöglicht wird.

Diese Aufgabe der Erfindung wird dadurch gelöst, dass im Schweißgerät ein Steuerprogramm aufgerufen wird und dadurch einer externen Bedieneinheit an einer externen Komponente selektiv der ausgewählte Schweißparameter zur Einstellung bzw. Verstellung zugeordnet wird, so dass bei Aktivierung bzw. Verstellung der externen Bedieneinheit an der externen Komponente dieser Schweißparameter eingestellt bzw. verändert wird. Somit wird eine sehr hohe Flexibilität bei der Bedienung des Schweißgerätes erreicht, da der Benutzer je nach Bedarf den externen Komponenten die unterschiedlichsten Schweißparameter zuordnen kann und diese von der externen Komponente aus verändern bzw. einstellen kann. Damit können für die unterschiedlichen Schweißprozesse immer die wesentlichsten Parameter einer externen Komponente zugeordnet werden. Als externe Komponenten können insbesondere ein Schweißbrenner, ein Fernregler, ein Steuerpult, eine Robotersteuerung usw. genannt werden. Grundsätzlich ist es aus dem Stand der Technik bekannt, dass von den externen Komponenten fix festgelegte Parameter verändert bzw. eingestellt werden können, so dass für die unterschiedlichsten Schweißprozesse bzw. Anwendungen mehrere unterschiedliche Komponenten eingesetzt werden, um eine optimale Einstellmöglichkeit zu erreichen. Dies ist bei der erfindungsgemäßen Lösung nunmehr nicht mehr notwendig, da der Benutzer die Möglichkeit hat, der externen Komponente einen oder mehreren der gewünschten Schweißparameter frei zuzuordnen. Somit kann für die unterschiedlichsten Anwendungen bzw. Schweißprozesse immer dieselbe externe Komponente eingesetzt werden. Von dieser externen Komponente kann je nach Bedarf ein anderer Schweißparameter eingestellt und verändert werden.

Vorteilhafterweise wird das Steuerprogramm über ein Bedienelement am Schweißgerät aufgerufen und durch abermaliges Aktivieren eines Bedienelements am Schweißgerät der Schweißparameter der externen Bedieneinheit an der externen Komponente zugeordnet.

Natürlich können auch mehrere Schweißparameter mehreren externen Bedieneinheiten an einer oder mehreren externen Komponenten zugeordnet werden. Dazu wird das Steuerprogramm mehrfach hintereinander aufgerufen und jeweils der gewünschte Schweißparameter der gewünschten externen Bedieneinheit an der gewünschten externen Komponente zugeordnet.

Die Zuordnungen der Schweißparameter zu den externen Bedieneinheiten der externen Komponenten im Schweißgerät werden vorzugsweise von einer Steuer- und/oder Auswertevorrichtung im Schweißgerät gespeichert. Dadurch stehen dem Benutzer die Zuordnungen der Schweißparameter zur Verfügung und können jederzeit vom Benutzer verändert werden.

Vorteilhafterweise wird zur Durchführung der flexiblen Parameterzuordnung von der Steuer- und/oder Auswertevorrichtung des Schweißgerätes eine Auswertung der von den externen Bedieneinheiten der externen Komponenten eingehenden Signale vorgenommen und diese den entsprechenden Schweißparametern zugeordnet und entsprechend verändert. Der Wert des jeweiligen Schweißparameters kann auch an der externen Komponente angezeigt werden.

Die Veränderung der externen Bedieneinheiten werden der externen Komponente vorzugsweise über Steuerleitungen, Lichtleiter, BUS-Systeme oder per Funk an das Schweißgerät übermittelt.

Die Erfindung wird anschließend durch ein Ausführungsbeispiel näher beschrieben.

Es zeigen:
Fig. 1 eine schematische Darstellung eines Schweißgerätes und
Fig. 2 eine schematische Darstellung einer Ein- und/oder Ausgabevorrichtung des Schweißgerätes.

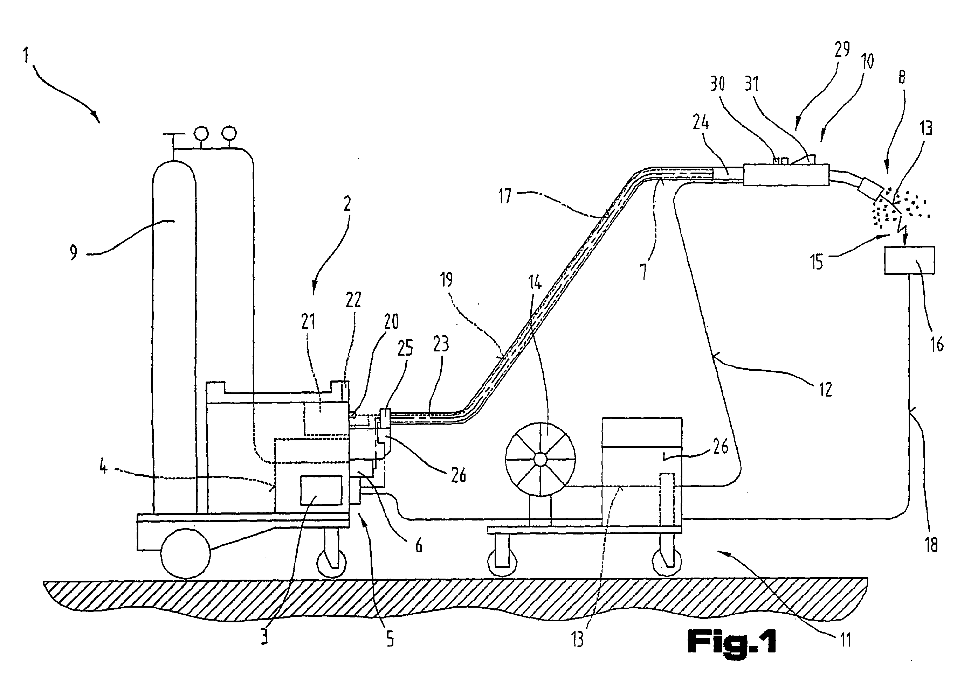

Fig. 1 zeigt ein Schweißgerät 1 bzw. eine Schweißanlage für verschiedenste Schweißverfahren, wie z.B. MIG (Metall-Inertgas)-Schweißverfahren, MAG (Metall-Aktivgas)-Schweißverfahren, TIG (Tungsten-Inertgas)-Schweißverfahren oder Elektroden-Schweißverfahren, gezeigt. Selbstverständlich ist es möglich, dass die erfindungsgemäße Lösung bei einer Stromquelle bzw. einer Schweißstromquelle eingesetzt werden kann.

Das Schweißgerät 1 umfasst eine Stromquelle 2 mit einem Leistungsteil 3, einer Steuer- und/oder Auswertevorrichtung 4 und einem dem Leistungsteil 3 bzw. der Steuer- und/oder Auswertevorrichtung 4 zugeordneten Umschaltglied 5. Das Umschaltglied 5 bzw. die Steuer- und/oder Auswertevorrichtung 4 ist mit einem Steuerventil 6 verbunden, welches in einer Versorgungsleitung 7 für ein Gas 8, insbesondere ein Schutzgas, wie beispielsweise CO₂, Helium, Argon od. dgl., zischen einem Gasspeicher 9 und einem Schweißbrenner 10 angeordnet ist.

Zudem kann über die Steuer- und/oder Auswertevorrichtung 4 noch eine kombinierte Vorschub- und Abzugvorrichtung 11 angesteuert werden, wobei wie beim MIG/MAG-Schweißen üblich, über eine Versorgungsleitung 12 ein Schweißdraht 13 von einer Vorratstrommel 14 in den Bereich des Schweißbrenners 10 zugeführt wird. Selbstverständlich ist es möglich, dass die Vorratstrommel 14, wie es aus dem Stand der Technik bekannt ist, im Schweißgerät 1, insbesondere im Grundgehäuse, angeordnet ist.

Der Strom zum Aufbauen eines Lichtbogens 15 zwischen dem Schweißdraht 13 und einem Werkstück 16 wird über eine Versorgungsleitung 17 vom Leistungsteil 3 der Stromquelle 2 dem Schweißbrenner 10 bzw. dem Schweißdraht 13 zugeführt, wobei das zu verschweißende Werkstück 16 über eine weitere Versorgungsleitung 18 ebenfalls mit dem Schweißgerät 1, insbesondere mit der Stromquelle 2, verbunden ist und somit über dem Lichtbogen 15 ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet wird und eine Kühlung des Schweißbrenners 10 bzw. des Schweißdrahtes 13 bewirkt wird.

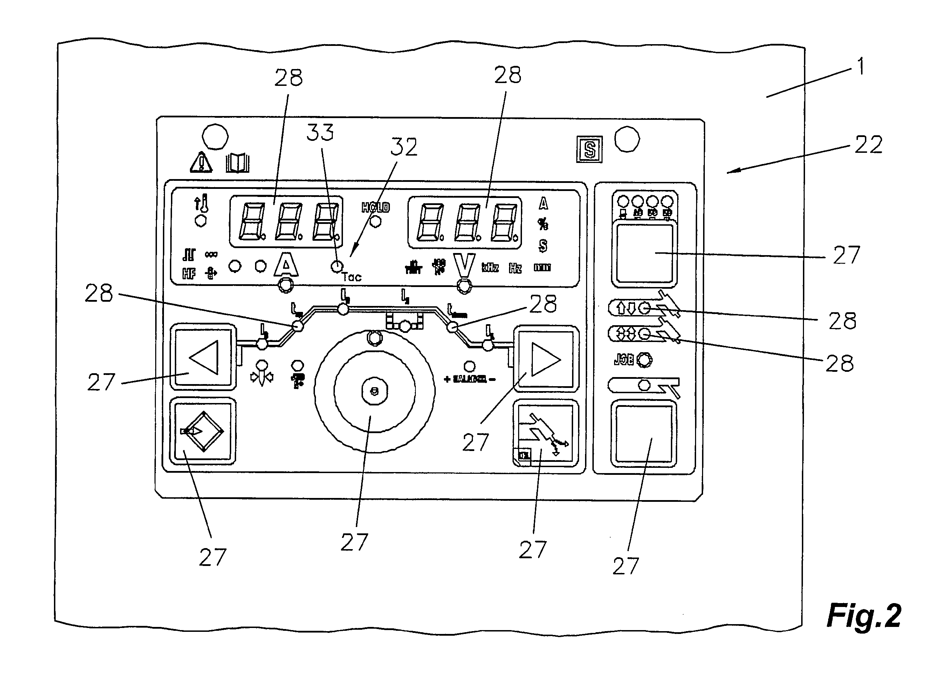

Das Schweißgerät 1 weist weiters eine Ein- und/oder Ausgabevorrichtung 22, wie dies in Fig. 2 schematisch dargestellt ist, auf, über die die unterschiedlichsten Schweißparameter oder Betriebsarten des Schweißgerätes 1 eingestellt werden können. Dabei werden die über die Ein- und/oder Ausgabevorrichtung 22 eingestellten Parameter an die Steuer- und/oder Auswertevorrichtung 4 weitergeleitet und anschließend die einzelnen Komponenten des Schweißgerätes 1 von dieser angesteuert.

Weiters ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine zum Stand der Technik zählende Verbindungsvorrichtung 24 mit dem Schweißbrenner 10 verbunden, wogegen die einzelnen Leitungen im Schlauchpaket 23 mit den einzelnen Kontakten des Schweißgerätes 1 über Anschlussbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden.

Bei den bekannten Schweißanlagen bzw. Schweißgeräten 1 wird die Einstellung der Parameter für einen Schweißprozess direkt vom Schweißgerät 1 aus über die Ein- und/oder Ausgabevorrichtung 22 durchgeführt. Hierzu sind an der Ein- und/oder Ausgabevorrichtung 22 bevorzugt mehrere Bedienelemente 27 in Form von Tasten, Drehschaltern, Potentiometern, Intergralgeber usw. angeordnet, über die der Benutzer die einzelnen Parameter anwählen und verändern kann. Weiters weist die Ein- und/oder Ausgabevorrichtung 22 noch Anzeigeelemente 28 auf, an denen die Werte bzw. Sollwerte oder Istwerte des gerade ausgewählten Parameters angezeigt werden.

Zusätzlich ist es meist möglich, dass einige Schweißparameter über externe Komponenten 29, insbesondere über den Schweißbrenner 10, eingestellt bzw. verändert werden können. Dabei ist beispielsweise am Schweißbrenner 10 zumindest eine externe Bedieneinheit 30 und ein Anzeigeelement 31 angeordnet, so dass der Benutzer den entsprechenden Wert eines Parameters über das Anzeigeelement 31 betrachten und den Parameter über die Bedieneinheit 30 verändern kann. Der Benutzer hat dabei aber nur die Möglichkeit, den fix definierten Schweißparameter bzw. mehrere fix definierte Schweißparameter am Schweißbrenner 10 zu verändern. Ist es erforderlich andere Parameter zu verändern, so muss der Benutzer die weiteren Parameter direkt am Schweißgerät 1 einstellen. Den externen Komponenten konnten bisher nur bestimmte fix definierte Parameter zugeordnet werden.

Bei der erfindungsgemäßen Lösung ist es nunmehr möglich, dass eine flexible Zuordnung der Parameter vom Schweißgerät 1 an externe Komponenten 29, insbesondere an den Schweißbrenner 10, durch Aufruf eines Steuerprogramms 32, eines sogenannten Parameter-Zuordnen-Programmes "E-P-Programms", durchgeführt wird. Der Benutzer hat somit die Möglichkeit, zumindest einen gewünschten Schweißparameter zumindest einer externen Komponente 29 zuzuordnen, um diesen Schweißparameter anschließend von der externen Komponente 29 aus verstellen zu können. Damit wird eine wesentliche Verbesserung des Schweißprozesses geschaffen, da je nach Anwendungsfall bzw. je nach benötigtem Schweißprozess der Benutzer eine freie Zuordnung der über die externen Komponenten 29 verstellbaren Schweißparametern treffen kann. Dadurch wird eine optimale Anpassung der externen Komponenten 29 an die unterschiedlichsten Schweißprozesse bzw. Anwendungsfälle geschaffen. Selbstverständlich ist es möglich, beliebig viele Parameter einer oder mehreren externen Komponenten 29 zuzuordnen.

Hierzu ist es lediglich notwendig, dass der Benutzer nach der Aktivierung Schweißgerätes 1 das Steuerprogramm 32 startet und die entsprechenden Schweißparameter am Schweißgerät 1 für eine oder mehrere externe Komponenten 29 auswählt. Durch Aktivieren eines Bedienelementes 27 am Schweißgerät 1 bzw. an der Stromquelle 2, insbesondere an der Ein- und/oder Ausgabevorrichtung 22 wird das Steuerprogramm 32 aufgerufen wird. Danach wird ein beliebiger Schweißparameter eingestellt bzw. ausgewählt und anschließend durch abermaliges Aktivieren eines Bedienelementes 27 dieser Schweißparameter zur Einstellung bzw. Veränderung eines Sollwertes einer externen Bedieneinheit einer externen Komponente 29, wie beispielsweise einem Schweißbrenner 10, einem Fernregler, einem Steuerpult, einer Robotersteuerung, usw., zugeordnet. Über die externe Bedieneinheit der externen Komponente 29 kann dann dieser Schweißparameter eingestellt und/oder verstellt werden. Somit kann der Benutzer nach der Ausführung des Steuerprogramms 32 und die ausgewählte Zuordnung über die entsprechende externe Komponente 29 den Schweißparameter einstellen bzw. verändern.

Dabei kann der Aufruf des Steuerprogramms 32 auf die unterschiedlichsten bekannten Arten, wie beispielsweise durch eine Menü-Führung, durch Betätigen eines entsprechenden Bedienelementes 27 oder dergleichen durchgeführt werden. Es wurde bei der in Fig. 2 dargestellten Ein- und/oder Ausgabevorrichtung 22 schematisch ein Anzeigeelement 33 "Tac" dargestellt, das dem Benutzer die Aktivierung des Steuerprogramms 32 anzeigt. Anschließend kann der Benutzer über die Bedienelemente 27 die entsprechenden Schweißparameter am Schweißgerät 1 auswählen und diese einer externen Komponente 29 zuordnen. Die Anzeige der Aktivierung des Steuerprogramms 32 kann jedoch auch über die üblichen Anzeigeelemente 28 geschehen.

Es ist auch möglich, dass das Steuerprogramm 32 mehrmals hintereinander ausgeführt wird bzw. in einem Arbeitsschritt mehrere Parameter ausgewählt werden, um diese einer oder mehreren externen Komponenten 29 zuzuordnen. Im Schweißgerät 1 wird von der Steuer- und/oder Auswertevorrichtung 4 die Zuordnung der Schweißparameter für die externen Komponenten 29 gespeichert, so dass diese dem Benutzer immer wieder zur Verfügung stehen, und diese Zuordnung jederzeit verändert werden kann.

Grundsätzlich ist zu erwähnen, dass der Datenaustausch zwischen dem Schweißgerät 1 und der externen Komponenten 29 durch übliche Systeme beispielsweise über Steuerleitungen, Lichtleiter, Bus-Systeme oder Funk durchgeführt wird. Um eine flexible Zuordnung durchführen zu können, ist es notwendig, dass von der Steuer- und/oder Auswertevorrichtung 4 eine entsprechende Auswertung der eingehenden Signale von den externen Komponenten 29 vorgenommen wird und diese den entsprechenden Schweißparametern zugeordnet wird, so dass anschließend von der Steuer- und/oder Auswertevorrichtung 4 eine Veränderung des hinterlegten Wertes bzw. des Sollwertes vorgenommen werden kann und diese Veränderung auch an der externen Komponente 29 angezeigt werden kann.

Somit ist es möglich, dass der Benutzer eine variable Zuordnung unterschiedlicher Schweißparameter an externe Komponenten durchführen kann, ohne dass dazu ein entsprechendes Fachpersonal benötigt wird.

## Patentansprüche

1. Verfahren zur Einstellung eines Parameters für externe Bedieneinheiten eines Schweißgerätes, wobei über unterschiedliche Bedienelemente und Anzeigeelemente am Schweißgerät die Schweißparameter ausgewählt und eingestellt werden können, **dadurch gekennzeichnet, dass** im Schweißgerät ein Steuerprogramm aufgerufen wird und **dadurch** einer externen Bedieneinheit an einer externen Komponente selektiv der ausgewählte Schweißparameter zur Einstellung bzw. Verstellung zugeordnet wird, sodass bei Aktivierung bzw. Verstellung der externen Bedieneinheit an der externen Komponente dieser Schweißparameter eingestellt bzw. verändert wird.

2. Verfahren nach Anspruch 1, **dadurch gekennzeichnet, dass** das Steuerprogramm über ein Bedienelement am Schweißgerät aufgerufen wird und durch abermaliges Aktivieren eines Bedienelementes am Schweißgerät der Schweißparameter der externen Bedieneinheit an der externen Komponente zugeordnet wird.

3. Verfahren nach Anspruch 1 oder 2, **dadurch gekennzeichnet, dass** mehrere Schweißparameter mehreren externen Bedieneinheiten an einer oder mehreren externen Komponenten zugeordnet werden.

4. Verfahren nach einem der Ansprüche 1 bis 3, **dadurch gekennzeichnet, dass** die Zuordnungen der Schweißparameter zu den externen Bedieneinheiten der externen Komponenten im Schweißgerät, vorzugsweise von einer Steuer- und/oder Auswertevorrichtung gespeichert werden.

5. Verfahren nach Anspruch 4, **dadurch gekennzeichnet, dass** von der Steuer- und/oder Auswertevorrichtung des Schweißgerätes eine Auswertung der von den externen Bedieneinheiten der externen Komponenten eingehenden Signale vorgenommen wird und diese den entsprechenden Schweißparametern zugeordnet und entsprechend verändert wird.

6. Verfahren nach einem der Ansprüche 1 bis 5, **dadurch gekennzeichnet, dass** die Veränderung der externen Bedieneinheiten der externen Komponente über Steuerleitungen, Lichtleiter, BUS-Systeme oder per Funk an das Schweißgerät übermittelt wird.

## Claims

1. A method for setting a parameter for external operating units of a welding apparatus, wherein the welding parameters are selectable and settable via different operating elements and display elements provided on the welding apparatus, **characterized in that** a control program is invoked in the welding apparatus and the selected welding parameter for setting or adjustment is thereby selectively allocated to an external operating unit provided on an external component, such that said welding parameter is set or changed upon activation or adjustment of the external operating unit provided on the external component.

2. A method according to claim 1, **characterized in that** the control program is invoked via an operating element provided on the welding apparatus and the welding parameter is allocated to the external operating unit provided on the external component by the renewed activation of an operating element provided on the welding apparatus.

3. A method according to claim 1 or 2, **characterized in that** several welding parameters are allocated to several external operating units provided on one or several external components.

4. A method according to any one of claims 1 to 3, **characterized in that** the allocations of the welding parameters to the external operating units of the external components provided in the welding apparatus are preferably stored by a control and/or evaluation device.

5. A method according to claim 4, **characterized in that** an evaluation of the signals received from the external operating units of the external components is effected by the control and/or evaluation device of the welding apparatus, and these signals are allocated to the respective welding parameters and changed accordingly.

6. A method according to any one of claims 1 to 5, **characterized in that** any changes of the external operating units of the external component are transmitted to the welding apparatus via control lines, optical fibers, bus systems or by radio.

## Revendications

1. Procédé de réglage d'un paramètre pour des unités de commande externes d'un appareil de soudage, où les paramètres de soudage peuvent être sélectionnés et réglés par l'intermédiaire de différents éléments de commande et d'affichage sur l'appareil de soudage,
**caractérisé en ce qu'**un programme de commande est appelé dans l'appareil de soudage, et que le paramètre de soudage sélectionné est ainsi affecté de façon sélective à une unité de commande externe montée sur un composant externe en vue de son réglage ou du changement de son réglage, de façon qu'en activant ou en modifiant le réglage de l'unité de commande externe sur le composant externe, ce paramètre de soudage soit réglé, voire modifié.

2. Procédé selon la revendication 1, **caractérisé en ce que** le programme de commande est appelé par l'intermédiaire d'un élément de commande monté sur l'appareil de soudage, et qu'avec une nouvelle activation d'un élément de commande de l'appareil de soudage, le paramètre de soudage de l'unité de commande externe est affecté au composant externe.

3. Procédé selon la revendication 1 ou 2, **caractérisé en ce que** plusieurs paramètres de soudage sont affectés à plusieurs unités de commande externes montées sur un ou plusieurs composant(s) exteme(s).

4. Procédé selon l'une des revendications 1 à 3, **caractérisé en ce que** les affectations des paramètres de soudage aux différentes unités de commande externes des composants externes sont enregistrées dans l'appareil de soudage, de préférence dans un dispositif de commande et/ou d'analyse.

5. Procédé selon la revendication 4, **caractérisé en ce que** le dispositif de commande et/ou d'analyse de l'appareil de soudage effectue une analyse des signaux entrant depuis les unités de commande externes des composants externes, et que celle-ci est affectée aux différents paramètres de soudage et modifiée en conséquence.

6. Procédé selon l'une des revendications 1 à 5, **caractérisé en ce que** la modification des unités de commande externes des composants externes est transmise à l'appareil de soudage par l'intermédiaire de câbles de commande, de conducteurs optiques, de systèmes de bus, ou par transmission radio.
